# EUROPEAN PATENT APPLICATION

(11) **EP 2 602 766 A1**
(43) Date of publication of application: **12.06.2013**
(21) Application number: 11814087.0
(22) Date of filing: 01.08.2011
(51) Int. Cl.: G07B 11/00, G06K 7/00, G06F 17/00

(54) **ELECTRONIC TICKET STORAGE APPARATUS AND ELECTRONIC TICKET CHECKING SYSTEM AND METHOD**

(30) Priority: 02.08.2010 CN 201010242528
(71) Applicant: China Mobile Communications Corporation, Beijing 100032 (CN)
(72) Inventor: YUE, Zuhui, Beijing 100032 (CN); LI, Zheng, Beijing 100032 (CN)
(74) Representative: Rutz, Andrea
(86) International application number: PCT/CN2011/077847
(87) International publication number: WO 2012/016504

(57) **Abstract**

Disclosed are an electronic ticket storage apparatus and an electronic ticket checking system and method. The electronic ticket checking method comprises: associating in advance basic electronic ticket information with preset additional information of the electronic tickets; during a first checking, modifying the additional information of the electronic tickets according to the basic information of the electronic tickets; and during a second checking, performing checking of the electronic tickets by checking the modified additional information of the electronic tickets.

## Description

This application claims the benefit of Chinese patent application No.201010242528.1, titled "ELECTRONIC TICKET STORAGE APPARATUS AND ELECTRONIC TICKET CHECKING SYSTEM AND METHOD THEREOF", filed with the Chinese Patent Office on August 2, 2010, which is hereby incorporated by reference in its entirety.

### FIELD OF THE INVENTION

The present application relates to an electronic ticket storage apparatus, an electronic ticket checking system and an electronic ticket checking method.

### BACKGROUND OF THE INVENTION

Generally, people have to present a paper ticket or an electronic ticket at movie theaters, sport events, commercial performances, or tourist attractions. Ticket checking is the practice of verifying the validity of a ticket held by a ticket holder, allowing those who with a valid ticket, and disallowing those with an invalid ticket and punishing them with certain measures. Conventional paper tickets cause paper waste and are subject to duplication or counterfeiting. Moreover, checking paper tickets requires a large amount of work, which may give rise to unchecked or false cases.

Different types of electronic tickets have been proposed to solve the paper waste problem, improve ticket security, and eliminate ticket scalping.

However, the inventors, during the development of the present invention, found that the prior art has at least the following disadvantage:

The existing electronic tickets cannot flexibly meet special requirements incurred in the cases such as where tickets have to be checked at both the entrance and the exit, and where tickets have to be checked at each of the venues inside a tourist attraction.

### SUMMARY OF THE INVENTION

The embodiments of the present invention provide an electronic ticket storage apparatus, an electronic ticket checking system and an electronic ticket checking method, to solve the problem in the prior art that the existing electronic tickets do not support flexible ticket checking.

In one aspect, the present application discloses a ticket checking method for an electronic ticket, including:
during initial ticket checking, modifying additional information of an electronic ticket according to basic information of the electronic ticket; and
during subsequent ticket checking of the electronic ticket, performing ticket checking on the electronic ticket by inspecting modified additional information of the electronic ticket.

In another aspect, the present application discloses an electronic ticket checking system, including:
an electronic ticket generation apparatus, adapted to generate an electronic ticket;
an electronic ticket storage apparatus, adapted to pre-store a plurality of pieces of additional information of electronic tickets, wherein basic information of the electronic tickets and the plurality of pieces of additional information of the electronic tickets are associated and stored in the electronic ticket storage apparatus; and
a plurality of ticket checking terminals at different ticket checking locations, wherein one ticket checking terminal of the plurality of ticket checking terminals acquires information of an electronic ticket and modifies the additional information of the electronic ticket according to the acquired information, so that the rest of the plurality of ticket checking terminals can perform ticket checking on the electronic ticket by inspecting the modified additional information of the electronic ticket.

In yet another aspect, it is disclosed an electronic ticket storage apparatus, including:
a first storage unit, adapted to store at least one piece of additional information of an electronic ticket; and
a second storage unit, adapted to store basic information of the electronic ticket,
wherein the at least one piece of the additional information of the electronic ticket is associated with the basic information of the electronic ticket, and includes data for indicating a scene where the electronic ticket can be used and an identifier bit for indicating whether the electronic ticket is an unused, new ticket.

Moreover, the present application also discloses a method for generating an electronic ticket, including:
generating basic information of an electronic ticket, the basic information including data for indicating a scene where the electronic ticket can be used; and
generating additional information of the electronic ticket, the additional information including: an identifier bit for indicating whether the electronic ticket is an unused, new ticket; and data for indicating a scene where the electronic ticket can be used,
wherein the additional information is associated with the basic information; during initial ticket checking, the identifier bit is used to determine the electronic ticket is an unused, new ticket, and the scene data in the basic information is used to determine the scene data in the additional information; and during subsequent ticket checking, the scene data in the additional information is inspected and modified so that usage of the electronic ticket is determined.

According to the electronic ticket storage apparatus, the electronic ticket checking system and the electronic ticket checking method provided by the embodiments of the present invention, the basic information of an electronic ticket is associated with preset additional information of the electronic ticket; during initial ticket checking, ticket checking is performed according to the basic information and the additional information of the electronic ticket is modified; during each subsequent ticket checking, ticket checking is performed according to the modified additional information, which may include checking the ticket and modifying the additional information of the electronic ticket after the subsequent ticket checking. Therefore, the requirement of checking electronic tickets at multiple scenes is met, and electronic tickets now support flexible and multi-location ticket checking. Especially, in the case where tickets have to be checked at both the entrance and the exit, and where tickets have to be checked at each of the venues inside a tourist attraction, flexible support is achieved.

### BRIEF DESCRIPTION OF THE DRAWINGS

Figure 1 illustrates an electronic ticket checking system according to an embodiment of the present application;

Figure 2 is a schematic diagram of associating electronic tickets with records of additional information of the tickets according to an embodiment of the present application;

Figure 3 is a flowchart of a ticket checking terminal performing a ticket checking transaction according to an embodiment of the present application;

Figure 4 illustrates a sub-step of step S201 shown in Figure 3;

Figure 5 is a flowchart of a ticket checking terminal performing a ticket checking transaction according to another embodiment of the present application.

### DETAILED DESCRIPTION OF THE EMBODIMENTS

Exemplary embodiments of the present application will be described hereinafter in detail in conjunction with the accompany drawings.

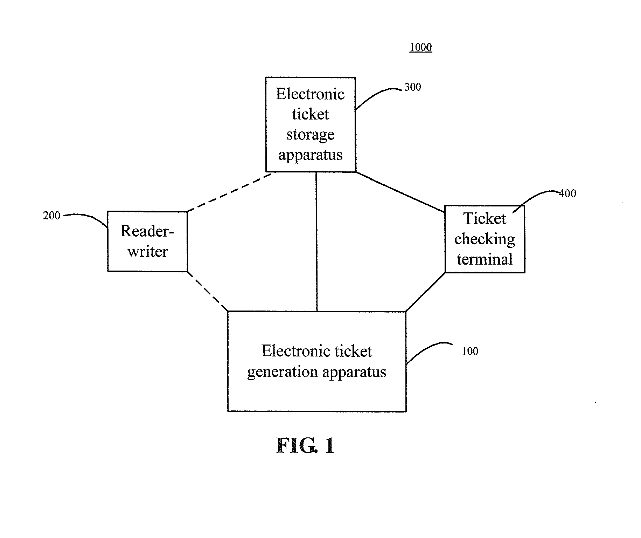

Figure 1 illustrates an electronic ticket checking system 1000 according to an embodiment of the present application. As shown in Figure 1, the system 1000 includes an electronic ticket generation apparatus 100, a reader-writer 200, an electronic ticket storage apparatus 300 and at least one ticket checking terminal 400. In the interest of clarity, Figure 1 shows only one ticket checking terminal 400.

The electronic ticket generation apparatus 100 is adapted to write electronic ticket information into the electronic ticket storage apparatus 300 via the reader-writer 200. Specifically, the reader-writer 200 submits a ticket writing request to the electronic ticket generation apparatus 100; the electronic ticket generation apparatus 100 writes an electronic ticket into the electronic ticket storage apparatus 300 via the reader-writer 200 after generating the electronic ticket according to the ticket writing request. The electronic ticket generated by the electronic ticket generation apparatus 100 may include inherent information of the electronic ticket, e.g., electronic ticket provider number, electronic ticket type, and time. Particularly, the generated electronic ticket may also include information for multiple times of ticket checking. The details of this will be omitted here, because it can be implemented with the prior art.

For example, the electronic ticket storage apparatus 300 may be any of the various smart cards such as Radio Frequency Identification (RFID)-Subscriber Identity Module (SIM) cards, Single Wired Protocol (SWP)-SIM cards, and Integrated Circuit (IC) cards. The electronic ticket storage apparatus 300 may also be a contact or contactless (any operating frequency) smart card, or some other type of storage apparatus. Additional information of the electronic ticket is stored in the electronic ticket storage apparatus 300. For example, the additional information may have a file format as show in Table 1.

**Table 1**

| | | | | | |
|---|---|---|---|---|---|
| File Identifier (SFI) | 0x19 | | | | |
| File Type | fixed-length record file | | | | |
| File Size | 64*20 | | | | |
| File Access Control | read = free | | rewrite = during ticket checking transaction | | |

| Record Number | Byte(s) | Data element | | Length | Format |
|---|---|---|---|---|---|
| 1-20 | 1 | whether-allow-overwrite identifier & New ticket-or-not information | | 1 | BCD |
| | | Note: 1. four higher-order bits represent whether or not overwriting is allowed (0x0 represents that overwriting is not allowed; 0x1 represents that overwriting is allowed, where overwriting means using the current record for a new ticket); | | | |
| | | 2. four lower-order bits represent whether or not subsequent information is valid. | | | |
| | 2-64 | ticket provider-defined data | | 63 | VAR |

The specific data values in Table 1 are exemplary. For example, the file identifier (SFI) may have a different value, the file type may be unfixed-length record file, or the record length may have a different value.

"1-20" in the record number column in Table 1 indicates that this file can have 20 entries of records, each of which may have the content as shown in Table 2.

**Table 2**

| Serial Number | Overwrite | Validity | Ticket Provider-defined Data |
|---|---|---|---|
| 1 | 0 | 0 | ticket information |
| 2 | 0 | 1 | ticket information |
| ... | ... | ... | ticket information |
| M | 1 | 1 | ticket information |
| ... | ... | ... | ticket information |
| N | 1 | 1 | ticket information |

Every row in Table 2 represents an entry of record. The columns of "overwrite" and "validity" correspond to the first byte in Table 1. The field of "overwrite" is writable by a ticket checking terminal. For example, the ticket checking terminal 400 sets the whether-allow-overwrite identifier of an electronic ticket to be 1 when the use of the electronic ticket is finished.

The field of "validity" will also be referred to as a "new ticket-or-not" identifier in the following description, which indicates whether or not an associated electronic ticket is a new ticket. For example, 0x0 may be set for representing a new ticket and 0x1 for an old one. When the value is 0x0, the ticket checking terminal does not parse the record.

"Ticket provider-defined data" corresponds to the 2-64th bytes. The ticket provider-defined data may be defined according to various application scenarios, e.g., number of the ticket checking terminal 400, or the time when ticket checking is performed. Moreover, the ticket provider-defined data also include data for recording at least one scene. As an example, in the case where a park has places of interest A and B, the ticket provider-defined data may include bytes for defining the places of interest A and B. For example, some four bits in the ticket provider-defined data may be used to define the place of interest A, and some other four bits may be used to define the place of interest B. When the four bits for defining the place of interest A is "0000", it is indicated that the electronic ticket associated with the information can be used for the place of interest A; when the four bits for defining the place of interest A is "1111", it is indicated that the electronic ticket associated with the information cannot be used for the place of interest A. The situations of the place of interest B are similar to those of the place of interest A.

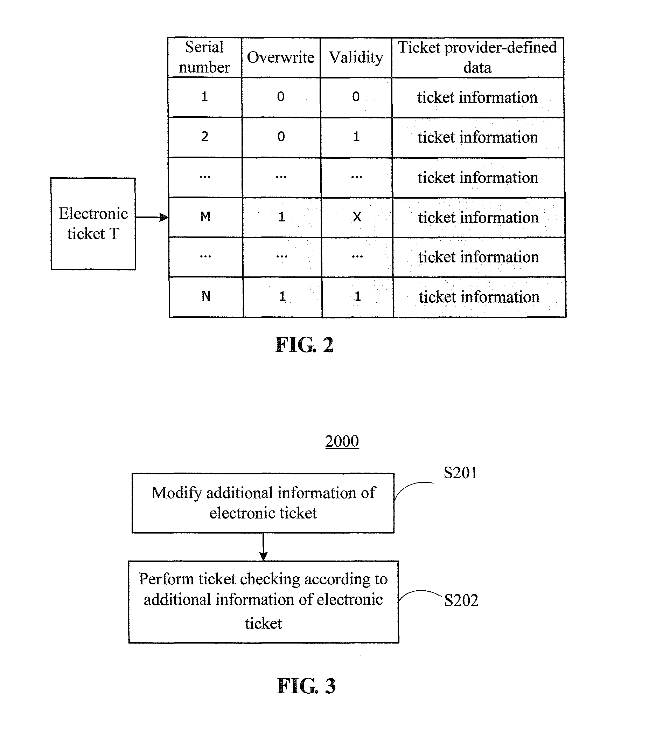

According to an embodiment, basic information of an electronic ticket and additional information of the electronic ticket are stored in a first storage unit and a second storage unit in the electronic ticket storage apparatus 300, respectively. When the electronic ticket storage apparatus 300 stores an electronic ticket generated by the electronic ticket generation apparatus 100, it searches for a record to be associated with the generated electronic ticket in an electronic ticket additional information record file stored in the electronic ticket storage apparatus 300. As shown in Figure 2 where an electronic ticket T is taken as an example, the electronic ticket storage apparatus 300 searches (e.g., from the record with serial number 1, or according to a predetermined rule) for a first entry of record allowed to be overwritten (e.g., the record with serial number M in Figure 2), establishes an association between the electronic ticket T and the record, and sets the "validity" identifier in the electronic ticket additional information record file to be 1 (hence subsequent information is invalid and the ticket checking terminal needs not to parse the "ticket provider-defined data"). For example, in an embodiment, the serial number of the associated record, e.g., M, may be stored in the storage space of the electronic ticket T, and the "validity" identifier of the record with record number M in the electronic ticket additional information record file is set to be "1". Optionally, the content of ticket information in the record is set to be null. If there is no record allowed to be overwritten in the electronic ticket additional information record file, failure information of "Ticket Storage Space Full" is returned and the ticket writing operation fails.

After storing the electronic ticket, the electronic ticket storage apparatus 300 returns a ticket writing success response to the electronic ticket generation apparatus 100 via the reader-writer 200. In another embodiment, the electronic ticket generation apparatus 100 and the electronic ticket storage apparatus 300 may have direct communication. In this case, the reader-writer 200 is omitted. For example, the reader-writer 200 can be omitted when mobile phone short messages are used for ticket writing.

For example, the at least one ticket checking terminal 400 may be a contact or contactless (any operating frequency) ticketing terminal, and may be positioned at the same ticket checking location or different ticket checking locations. The electronic ticket generation apparatus 100, the reader-writer 200, the electronic ticket storage apparatus 300 and the ticket checking terminal 400 may communicate with one another in a wired/contact or wireless/contactless manner.

During initial ticket checking, e.g., at the entrance of a park, a ticket checking apparatus 400 at the park entrance reads additional information of an electronic ticket and determines whether the electronic ticket is an unused, new ticket according to the "validity" identifier in the additional information of the electronic ticket. If it is determined that the electronic ticket is an unused, new ticket, the ticket checking apparatus 400 stops parsing the "ticket provider-defined data" in the additional information of the electronic ticket and modifies the "validity" identifier (i.e., new ticket-or-not identifier) into information indicating that the ticket is not a new ticket, e.g., 0. When a ticket checking apparatus 400 at some other place of interest, e.g., the place of interest A, performs ticket checking on the electronic ticket, the ticket checking apparatus 400 reads the "validity" identifier, and determines that it needs to parse or modify the ticket provider-defined data. Therefore, the ticket checking apparatus learns from the electronic ticket that the ticket allows a visit to the place of interest A, and learns according to the ticket provider-defined data in the additional information of the ticket that the ticket holder has entered the park but has not visited the place of interest A. Then, the ticket holder is allowed to visit the place of interest A; and the ticket checking apparatus modifies, during ticket checking, the ticket provider-defined data by setting a bit for representing whether the place of interest A has been visited to be 1 and maintaining the rest of the information, and writes these back into the storage apparatus 300.

Alternatively, when the ticket checking apparatus 400 at the park entrance determines that the electronic ticket is an unused, new ticket, it acquires, from the electronic ticket, data of a scene where the ticket can be used, and instructs the electronic storage apparatus 300 to include corresponding data to the additional information of the electronic ticket. For example, if the electronic ticket can be used for visiting the place of interest A inside the park in addition to entering the park, the ticket checking apparatus at the park entrance modifies an identifier for the place of interest A in the additional information of the electronic ticket into 1, i.e., valid. When a ticket checking terminal, e.g., at the place of interest A, performs ticket checking on the electronic ticket, it determines according to the identifier for the place of interest A in the additional information of the electronic ticket that the electronic ticket can be used for the place of interest A, i.e., ticket checking is passed, and then modifies the identifier for the place of interest A into "invalid".

The procedure of a ticket checking terminal performing a ticket checking transaction according to an embodiment of the present application is described below in conjunction with Figure 3.

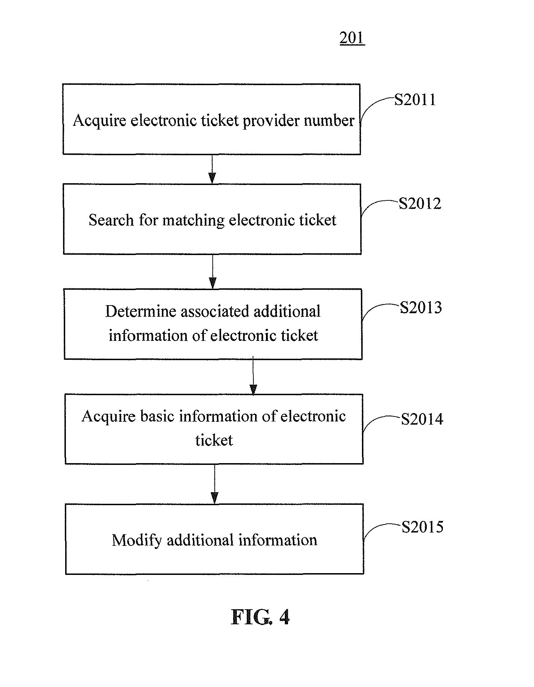

In step S201, a ticket checking terminal 400 acquires information of an electronic ticket and instructs, according the acquired information, an electronic ticket storage apparatus 300 to modify additional information of the electronic ticket. Specifically, when a ticket checking terminal at a first ticket checking location (e.g., the park entrance) determines according to additional information of an electronic ticket stored in the electronic ticket storage apparatus 300 that the electronic ticket is an unused, new ticket, it learns by acquiring basic information of the electronic ticket that the electronic ticket can be used for the places of interest A and B. Then, the ticket checking terminal sets bits for defining the places of interest A and B in the "ticket provider-defined data" in the additional information of the electronic ticket to be 0s, and sets the "new ticket-or-not" identifier to be 0. Detailed processing in step S201 is further described with reference to Figure 4.

In step S2011, for example, the ticket checking terminal at the park entrance sends to the electronic ticket storage apparatus an instruction including at least an electronic ticket provider number. The instruction may be, e.g., a conventional INITIALIZE FOR CHECK command. In step 2012, the electronic ticket storage apparatus 300 searches according to the electronic ticket provider number for an electronic ticket that matches the electronic ticket provider number, and in Step 2013, determines according to information of the matching electronic ticket additional information of the electronic ticket associated with the electronic ticket.

In step S2014, the ticket checking terminal determines according to the "new ticket-or-not" identifier in the determined additional information of the electronic ticket that the electronic ticket is an unused, new ticket. In step S2015, the ticket checking terminal acquires, according to basic information of the electronic ticket, data of a scene where the electronic ticket can be used. Then, in step S2016, the ticket checking terminal modifies correspondingly the additional information of the electronic ticket according to the acquired scene data, e.g., by setting the identifiers for representing whether the places of interest A and B have been visited in the additional information of the electronic ticket to be 0, setting an identifier for representing the ticket holder has entered the park to be 0, and setting the new ticket-or-not identifier to be 0, and writes these back into the electronic storage apparatus 300.

In step S202, during each subsequent ticket checking, the ticket checking terminal performs ticket checking on the electronic ticket according to the modified additional information of the electronic ticket, which includes checking the ticket according to the additional information of the electronic ticket and modifying the additional information of the electronic ticket. Specifically, during ticket checking by a ticket checking terminal at the place of interest A, when the ticket checking terminal determines that the "new ticket-or-not" identifier in the additional information associated with the electronic ticket is 0, the ticket checking terminal learns from the basic information of the electronic ticket that the ticket allows a visit to the place of interest A. The ticket checking terminal also learns from the "ticket provider-defined data" in the additional information of the ticket that the ticket holder has entered the park and has not visited the place of interest A. Then, the ticket holder is allowed to visit the place of interest A; and the ticket checking apparatus, during ticket checking, sets the identifier for representing whether the place of interest A has been visited to be 1 and maintains the rest of the information, and writes these back into the storage apparatus 300.

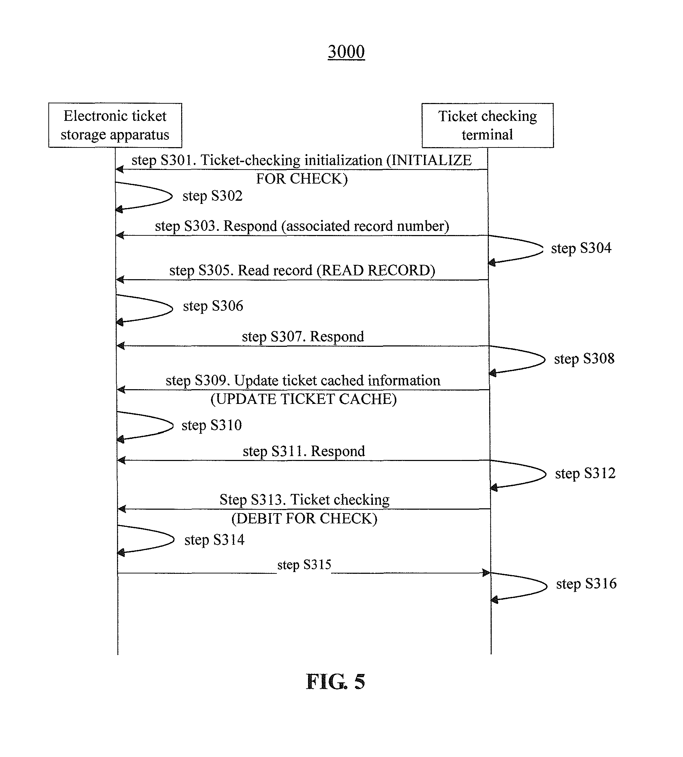

The procedure of a ticket checking terminal performing a ticket checking transaction according to another embodiment of the present application is described below in conjunction with Figure 5.

In step S301, a ticket checking terminal 400 sends to an electronic ticket storage apparatus 300 an instruction for instructing the electronic ticket storage apparatus 300 to perform an initialization operation. For example, according to an embodiment, the initialization instruction sent by the ticket checking terminal 400 to the electronic ticket storage apparatus 300 may be an INITIALIZE FOR CHECK command complying with the International Organization for Standardization (ISO)/ International Electrotechnical Commission (IEC) 7816-4 data format, and may include an electronic ticket provider number. The INITIALIZE FOR CHECK command is part of the prior art and the details of it will be omitted here.

In step S302, the electronic ticket storage apparatus 300 searches according to the electronic ticket provider number included in the received initialization instruction for a matching electronic ticket in its electronic ticket storage space. If it finds no matching item, then in step S303, the electronic ticket storage apparatus 300 returns fault information to the ticket checking terminal 400. If it finds a matching item, then step S303, the electronic ticket storage apparatus 300 returns information of the matching electronic ticket to the ticket checking terminal 400, e.g., serial number of the electronic ticket and record number M of the associated information of the electronic ticket that matches the serial number. In an embodiment, the information returned to the ticket checking terminal 400 in step S303 may also include information for security verification of the electronic ticket, e.g., some other electronic ticket information tag, electronic ticket information length, electronic ticket information (Tag-Length-Value (TLV) format), etc.

In step S304, the ticket checking terminal 400 acquires the associated record number M of the matching electronic ticket returned by the electronic ticket storage apparatus 300. In step S305, the ticket checking terminal 400 sends a read-record instruction (e.g., READ RECORD) to the electronic ticket storage apparatus 300, for reading a record with the associated record number M in an electronic ticket additional information record file.

In step S306, the electronic ticket storage apparatus 300 searches according to the READ RECORD instruction for the record with the record number M in the electronic ticket additional information record file, and in step S307, returns the contents of the fields of "validity" and "ticket additional information" in the record to the ticket checking terminal 400. Optionally, the ticket checking terminal 400 may read the contents of the fields of "validity" and "ticket additional information" directly from the electronic ticket storage apparatus 300.

Then, in step S308, the ticket checking terminal 400 determines whether the additional information of the electronic ticket T is valid according to the content of the field "validity" ("new ticket-or-not"), and if it is invalid, the ticket checking terminal 400 needs not to parse the content of the additional information. If it is determined that the additional information of the electronic ticket T is valid, then the additional information of the electronic ticket is processed and new additional information to be written is formed. For example, the ticket checking terminal learns from the basic information of the ticket that the ticket allows a visit to the place of interest A and learns from the fields of "validity" and "ticket provider-defined data" that the ticket holder has entered the park but has not visited the place of interest A. Then, the ticket holder is allowed to visit the place of interest A; and the ticket checking terminal prepares to set, during ticket checking, the identifier for representing whether the place of interest A has been visited to be 1(this will be described later). Optionally, the ticket checking terminal 400 may firstly verify the information of the electronic ticket for security verification, and process the additional information of the electronic ticket when the verification is passed. The security verification of electronic tickets can be implemented with the prior art, and thus the details of it will be omitted here.

Then, in step S309, a data instruction for updating the additional information of the electronic ticket is sent to the electronic ticket storage apparatus 300. The electronic ticket storage apparatus 300 rewrites or updates the record with the associated number, e.g., M, in the ticket additional information file according to the received data instruction. This is described in detail below with steps S310-S316.

In step S310, if the received updating instruction includes SFI information, the electronic ticket storage apparatus 300 checks whether in the current selected application exists a file that has the same Short File Identifier (SFI) value as that indicated in the instruction, checks whether in the ticket additional information dedicated file exists a record according to its record number indicated in the instruction, checks whether the data field length indicated in the instruction is longer than the length of the corresponding record in the ticket additional information dedicated file, and returns in step S311 response information to the ticket checking terminal according to the result of the checks. Specifically, if the result of the checks in step S310 is that there is no file having the same SFI value as that indicated in the instruction, i.e., the received SFI is wrong, then a massage representing "failure to find the file" is returned without other data in step 311; if the result of the checks in step S310 is that there is no such record in the ticket additional information dedicated file, then a massage with the status code "failure to find the record" is returned without other data in step 311; if the result of the checks in step S310 is that the data field length indicated in the updating instruction is longer than the length of the corresponding record in the ticket additional information dedicated file, a massage with the status code "not enough storage space in the file" is returned without other data in step 311

In step S312, the ticket checking terminal 400 performs determination according to the response information, and prompts the user and ends the procedure in case of fault.

In step S313, the ticket checking terminal 400 sends to the electronic ticket storage apparatus 300 a rewriting instruction for rewriting the corresponding record in the ticket additional information dedicated file. Then, in step S314, in response to the rewriting instruction received in step S313, data in the corresponding record in the ticket additional information dedicated file are updated using temporarily-stored information from step S310. In an embodiment, the electronic ticket storage apparatus 300 may firstly perform security verification on the information of the electronic ticket, and when the verification is passed, update the data in the corresponding record in the ticket additional information dedicated file using the temporarily-stored information from step S310. In step 315, the electronic ticket storage apparatus 300 returns to the ticket checking terminal 400 response information including the serial number of the electronic ticket and security verification information. In step S316, the ticket checking terminal 400 stores the serial number of the electronic ticket and the security verification information according to the returned response information. It is noted that those skilled in the art shall understand that step S315 and step S316 are optional.

Explanatory embodiments of the present application are described above. According to these embodiments, various modifications can be made to the embodiments by those skilled in the art without deviation from the scope defined by the attached claims.

## Claims

1. A ticket checking method for an electronic ticket, comprising:
pre-associating basic information of an electronic ticket with pre-set additional information of the electronic ticket;
during initial ticket checking, modifying the additional information of the electronic ticket according to the basic information of the electronic ticket; and
during each subsequent ticket checking of the electronic ticket, performing ticket checking on the electronic ticket by inspecting the modified additional information of the electronic ticket.

2. The ticket checking method according to claim 1, wherein the modifying the additional information of the electronic ticket according to the basic information of the electronic ticket comprises:
determining, by a ticket checking terminal at a first ticket checking location, the electronic ticket is a new ticket, and modifying correspondingly the additional information of the electronic ticket so that an identifier for indicating that the electronic ticket is a new ticket is stored in the additional information of the electronic ticket.

3. The ticket checking method according to claim 2, wherein the performing ticket checking on the electronic ticket by inspecting the modified additional information of the electronic ticket comprises:
determining, by a ticket checking terminal at a second ticket checking location, the electronic ticket is an unused, new ticket according to the identifier stored in the additional information of the electronic ticket;
acquiring according to the basic information, by the ticket checking terminal at the second ticket checking location, data of a scene that is associated with the second ticket checking location and is where the electronic ticket is allowed to be used; and modifying data associated with the scene in the additional information of the electronic ticket, so that the electronic ticket is not allowed to be used for the scene associated with the second ticket checking location when the electronic ticket is checked for a second time at the second ticket checking location.

4. The ticket checking method according to claim 2, wherein the ticket checking terminal at the first ticket checking location modifying the additional information of the electronic ticket according to the basic information of the electronic ticket comprises:
determining according to the additional information of the electronic ticket, by the ticket checking terminal at the first ticket checking location, that the electronic ticket is an unused, new ticket;
acquiring, by the ticket checking terminal at the first ticket checking location, data of a scene where the electronic ticket can be used according to the basic information, and modifying correspondingly the additional information of the electronic ticket according to the acquired scene data, so that data of the scene where the electronic ticket can be used are stored in the additional information of the electronic ticket.

5. The ticket checking method according to claim 4, wherein the performing ticket checking on the electronic ticket by inspecting the modified additional information of the electronic ticket comprises:
acquiring, by a ticket checking terminal at a second ticket checking location, data associated with a scene of the second ticket checking location stored in the additional information of the electronic ticket, and modifying the acquired data to be invalid.

6. The ticket checking method according to claim 1, wherein the pre-associating basic information of an electronic ticket with pre-set additional information of the electronic ticket comprises:
associating and storing the basic information of the electronic ticket and the additional information of the electronic ticket in an electronic ticket storage apparatus.

7. The ticket checking method according to claim 6, wherein the performing ticket checking on the electronic ticket by inspecting the modified additional information of the electronic ticket comprises:
sending to the electronic ticket storage apparatus, by a ticket checking terminal at a second ticket checking location, an instruction comprising an electronic ticket provider number;
searching according to the electronic ticket provider number, by the electronic ticket storage apparatus, for an electronic ticket that matches the electronic ticket provider number;
determining according to information of the matching electronic ticket, by the electronic ticket storage apparatus, additional information associated with the electronic ticket;
determining, by the ticket checking terminal at the second ticket checking location, that the electronic ticket is an unused, new ticket according to the determined additional information of the electronic ticket; and
acquiring, by the ticket checking terminal at the second ticket checking location, data of a scene where the electronic ticket can be used, and modifying correspondingly the additional information of the electronic ticket according to the acquired scene data.

8. The ticket checking method according to claim 1, wherein the additional information of the electronic ticket comprises an identifier for determining whether the electronic ticket is a new ticket and data for at least one scene, and
wherein the ticket checking terminal does not check the data for at least one scene when it is determined according to the identifier that the electronic ticket is a new ticket.

9. An electronic ticket checking system, comprising:
an electronic ticket storage apparatus, adapted to pre-store a plurality of pieces of additional information of electronic tickets, wherein basic information of the electronic tickets and the plurality of pieces of additional information of the electronic tickets are associated and stored in the electronic ticket storage apparatus; and
a plurality of ticket checking terminals at different ticket checking locations, wherein one ticket checking terminal of the plurality of ticket checking terminals acquires information of an electronic ticket and modifies the additional information of the electronic ticket according to the acquired information, so that the rest of the plurality of ticket checking terminals can perform ticket checking on the electronic ticket by inspecting the modified additional information of the electronic ticket.

10. The electronic ticket checking system according to claim 9, wherein the additional information of an electronic ticket comprises an identifier for determining whether the electronic ticket is an unused, new ticket, and the electronic ticket comprises data for indicating usage at least one scene;
wherein when the one ticket checking terminal of the plurality of ticket checking terminals determines that the electronic ticket is a new ticket according to the identifier, it acquires data for indicating the at least one scene in the electronic ticket, and sets correspondingly the data for indicating the at least one scene in the additional information of the electronic ticket to be valid,.

11. The electronic ticket checking system according to claim 10, wherein when the rest of the plurality of ticket checking terminals performs ticket checking on the electronic ticket, the rest of the plurality of ticket checking terminals acquires data for indicating the at least one scene in the additional information of the electronic ticket, and sets data of a scene associated with the ticket checking terminal in the data of the at least one scene to be invalid after the ticket checking operation.

12. The electronic ticket checking system according to claim 9, wherein
a ticket checking terminal of the plurality of ticket checking terminals that is located at a first location acquires the basic information of an electronic ticket and modifies the additional information of the electronic ticket according to the acquired information, so that the additional information of the electronic ticket comprises data for indicating at least one scene;
wherein when a ticket checking terminal located at a second location performs ticket checking on the electronic ticket, the ticket checking terminal located at the second location performs ticket checking on the electronic ticket according to the data for indicating at least one scene comprised in the additional information of the electronic ticket.

13. The electronic ticket checking system according to claim 9, wherein the additional information of an electronic ticket further comprises a whether-allow-overwrite identifier bit for indicating whether a record of the additional information of the electronic ticket associated with the electronic ticket is allowed.

14. The electronic ticket checking system according to any one of claims 9-13, further comprising:
a reader-writer, adapted to submit a ticket writing request to an electronic ticket generation apparatus, wherein the reader-writer writes a generated electronic ticket into the electronic ticket storage apparatus after the electronic ticket generation apparatus generates the electronic ticket according to the ticket writing request.

15. An electronic ticket storage apparatus, comprising:
a first storage unit, adapted to store at least one piece of additional information of an electronic ticket; and
a second storage unit, adapted to store basic information of the electronic ticket,
wherein the at least one piece of the additional information of the electronic ticket is associated with the basic information of the electronic ticket, and comprises data for indicating a scene where the electronic ticket can be used and an identifier bit for indicating whether the electronic ticket is an unused, new ticket.

16. The electronic ticket storage apparatus according to claim 15, wherein the additional information of the electronic ticket further comprises:
an identifier bit for indicating whether it is allowed to associate the electronic ticket with the additional information of the electronic ticket.

17. A method for generating an electronic ticket, comprising:
generating basic information of an electronic ticket, the basic information comprising data for indicating a scene where the electronic ticket can be used; and
generating additional information of the electronic ticket, the additional information comprising: an identifier bit for indicating whether the electronic ticket is an unused, new ticket; and data for indicating a scene where the electronic ticket can be used,
wherein the additional information is associated with the basic information; during initial ticket checking, the identifier bit is used to determine the electronic ticket is an unused, new ticket, and the scene data in the basic information is used to determine the scene data in the additional information; and during subsequent ticket checking, the scene data in the additional information is inspected and modified so that usage of the electronic ticket is determined.
